# EUROPÄISCHE PATENTSCHRIFT

(11) **EP 0 791 148 B1**
(45) Veröffentlichungstag und Bekanntmachung des Hinweises auf die Patenterteilung: **27.01.1999**
(21) Anmeldenummer: 95938383.7
(22) Anmeldetag: 02.11.1995
(51) Int. Cl.: F16H 57/02

(54) **SCHRÄGVERZAHNTES PLANETENGETRIEBE**
HELICALLY CUT PLANETARY GEAR
BOITE PLANETAIRE A DENTURE HELICOIDALE

(30) Priorität: 09.11.1994 DE 4439976
(43) Veröffentlichungstag der Anmeldung: 27.08.1997
(73) Patentinhaber: ZF FRIEDRICHSHAFEN Aktiengesellschaft, 88038 Friedrichshafen (DE)
(72) Erfinder: FÜHRER, Gerhard, D-88048 Friedrichshafen (DE); OSTERLOFF, Kurt, D-88048 Friedrichshafen (DE)
(86) Internationale Anmeldenummer: EP9504282
(87) Internationale Veröffentlichungsnummer: WO9615393

(56) Entgegenhaltungen:
- DE-A- 2 815 847
- DE-A- 4 216 397
- DE-C- 401 652
- FR-A- 2 588 344

## Beschreibung

Die Erfindung betrifft ein Planetengetriebe in schrägverzahnter Bauweise, insbesondere für Kraftfahrzeuge, mit einem mit einer Antriebswelle drehfest verbindbaren Sonnenrad, mehreren in einem Planetenträger gelagerten Planetenrädern und einem die Planetenräder umschließenden Hohlrad, das mit einem Hohlradträger verbunden ist.

Der Einsatz von Planetengetrieben im Kraftfahrzeugbau ist bereits allgemein bekannt. Schrägverzahnte Planetengetriebe besitzen im Vergleich zu geradverzahnten Getrieben eine deutlich höhere Laufruhe, was im Hinblick auf die zunehmend verschärften Lärmschutzverordnungen immer mehr an Bedeutung gewinnt.

Als Vorteil der einfach schrägverzahnten Bauweise läßt sich nennen, daß äußere Axialkräfte durch Wärmedehnung oder Kupplungsschübe nicht von der Verzahnung übertragen werden. Ebenfalls ergibt sich eine geringe Gesamtzahnradbreite und damit billige Schmiederohlinge.

Problematisch bei schrägverzahnten Planetengetrieben ist jedoch zum einen deren aufwendige Herstellung und Montage und zum anderen die Beherrschung der hohen Axialkräfte aufgrund der Schrägverzahnung. Diese Axialkräfte belasten benachbarte Bauteile, wie die Antriebswelle und die Abtriebswelle, sehr stark. Auf die Planetenräder wirken dabei darüber hinaus auch sehr hohe Kippmomente, was die Radiallager erheblich belastet. Infolge der freien Axialkräfte aus der Verzahnung können keine beliebig großen Schrägungswinkel vorgesehen werden, da die Kräfte auf die erforderlichen Axiallager sonst zu groß werden. Üblicherweise bewegen sich die Schrägungswinkel bei Einfachschrägverzahnungen zwischen zehn bis fünfzehn Grad. Durch die geringen Schrägungswinkel findet keine große Sprungüberdeckung statt. Notwendige Axiallagerungen bewirken erhöhte Lagerverluste und schlechteren Wirkungsgrad.

Aus der DE-PS 401 652 ist ein Stirnrädergetriebe mit einer Einfachschrägverzahnung bekannt, bei der zur Aufnahme des Axialschubes ein mitumlaufender Druckring vorgesehen ist. Vorgesehen sind unterschiedliche Ausgestaltungen des Druckringes, der einmal so ausgelegt ist, daß er Axialschübe nur in einer Richtung aufnimmt, oder aber durch Anordnung von zwei entgegengesetzten Druckflächen an einem Ring Axialschübe in beide Richtungen aufnehmen kann. Auftretende Stöße lassen sich durch elastische Elemente zwischen Druckring und Zahnrad abfedern, beispielsweise durch federnde Ausbildung der Druckringe oder durch elastische Zwischenelemente.

Als Methoden der Anbringung von Druckringen sind beispielsweise aus der DE-PS 28 15 847 folgende Methoden bekannt:
1. Der Druckring wird stirnseitig angeschraubt. Diese Befestigungsart ist nur bei Getrieben mit verhältnismäßig großem Ritzel (kleines Übersetzungsverhältnis) möglich, da der nach innen reichende Flansch des Druckringes zusätzlichen Raum beansprucht.
2. Der Druckring ist aufgeschrumpft, ohne zusätzliche Sicherung gegen axiales Verschieben. Diese Befestigungsart erfordert für eine ausreichende Sicherheit gegen Rutschen neben großen Schrumpfpressungen auch große Schrumpfringbreiten. In besonderem Maße trifft das bei hohen Drehzahlen zu durch die dabei entstehenden Verminderungen der Pressung als Folge der Ringaufweitung. Große Druckringbreiten ergeben aber nachteilige Vergrößerungen der Radsatz- und Getriebebreiten.
3. Der Druckring sitzt mit Schrumpfsitz auf der Welle. Zusätzlich wird er jedoch durch einen geteilten Ring und einen Haltering gesichert. Diese zusätzliche Sicherung soll vor allem vorbeugend wirken gegen die Unsicherheit der Schrumpfverbindung und gegen die ungünstige Beanspruchung des Druckringes bei Stirnrädergetrieben durch den exzentrischen Kraftangriff des Axialschubes. Als Sicherungselemente werden hauptsächlich Muttern, Sicherungsringe, zweiteilige Einlegeringe mit zusätzlichem Haltering und radiale Stifte sowie Schrauben verwendet. Neben dem Nachteil eines konstruktiv aufwendigen Aufbaus haben Erfahrungen mit aufgeschraubten Druckringen ergeben, daß es notwendig ist, die Feinbearbeitung (Schleifen) der Druckring-Anlaufflächen erst nach dem Aufschrumpfen durchzuführen, da sonst durch das festgestellte Verkanten des Druckringes beim Schrumpfprozeß ein schlagfreier Lauf der Druckflächen nicht gewährleistet ist. Diese Forderung benachteiligt technisch und preislich die Herstellung.
4. Der Druckring sitzt mit einer Übergangs- oder leichten Preßpassung auf der Welle und wird mit der Welle durch Elektronenstrahlschweißen zu einer einstückigen homogenen Einheit verbunden.

Aus der gattungsgemäßen DE-A-42 16 397 ist schließlich ein Planetengetriebe in schrägverzahnter Bauweise, insbesondere für Kraftfahrzeuge, bekannt, das mit einem mit einer Antriebswelle drehfest verbindbaren Sonnenrad, mehreren in einem Planetenträger gelagerten Planetenrädern und einem die Planetenräder umschließenden Hohlrad, das mit einem Hohlradträger verbunden ist, versehen ist. Zur Axialkraftaufnahme sind Druckringe zwischen dem Sonnenrad und den Planetenrädern und zwischen den Planetenrädern und dem Hohlrad vorgesehen, die an den Stirnseiten der jeweiligen Zahnräder angeordnet sind. Die Druckringe sind beidseitig der Planetenräder angeordnet, um sowohl in Zug- als auch in Schubrichtung die Axialkräfte aufnehmen zu können. Dies bedeutet eine aufwendige Montage durch die Anordnung von vier Druckflächen-Paarungen und gleichzeitig hohe Kosten, da die Druckflächen zur Erreichung eines gesicherten Schmierölkeils zwischen ihnen sorgfältig und aufwendig gefertigt werden müssen. Die Druckringe sind dabei an das Sonnenrad beidseitig angeschweißt.

Der vorliegenden Erfindung liegt daher die Aufgabe zugrunde, die vorstehend beschriebenen Probleme bei einem Planetengetriebe in schrägverzahnter Bauweise zu beherrschen, insbesondere ein Planetengetriebe zu schaffen, das mit geringem Aufwand und leichterer Montage herstellbar ist, wobei die auftretenden Axialkräfte besser beherrschbar sein sollen.

Erfindungsgemäß wird diese Aufgabe dadurch gelöst, daß zur Axialkraftaufnahme im Zugbetrieb eine Druckflächen-Paarung zwischen dem Sonnenrad und den Planetenrädern und eine Druckflächen-Paarung zwischen den Planetenrädern und dem Hohlradträger vorgesehen sind. Eine Axialabstützung im Schubbetrieb findet nicht statt. Dabei kann einerseits ein Druckring am Sonnenrad angeordnet sein, der mit seiner Druckfläche mit einer Druckfläche der Planetenräder auf der dem Hohlradträger abgewandten Seite in Berührung steht, während die Planetenräder mit ihrer dem Hohlradträger zugewandten Druckfläche mit einer Druckfläche eines Druckringes am Hohlradträger in Berührung stehen. Möglich ist auch eine Ausgestaltung derart, daß das Sonnenrad direkt von einer Verzahnung auf der Antriebswelle des Planetengetriebes, beispielsweise der Hauptwelle eines vorgeschalteten mehrstufigen Hauptgetriebes, gebildet wird, und der Druckring mit einer Innenverzahnung auf dieses derart gestaltete Sonnenrad verdrehfest aufgeschoben wird und dann mit seiner Druckfläche mit der dem Hohlradträger abgewandten Druckfläche der Planetenräder in Berührung steht zur Aufnahme axialer Kräfte. Ein solcher Druckring kann sich dann beispielsweise über ein Kegelrollenlager am Getriebegehäuse abstützen. Die Schrägungsrichtung einer derart gestalteten Sonnenradverzahnung ist so gerichtet, daß die im Zugbetrieb auftretenden Axialkräfte von den Druckflächen-Paarungen aufgenommen werden können. Die Planetenräder sind dabei auf beiden Seiten mit Druckflächen ausgestaltet.

Durch die erfindungsgemäßen Druckflächen-Paarungen können die im Zugbetrieb, dem am häufigsten auftretenden Betriebszustand, auftretenden Axialkräfte direkt am Entstehungsort eliminiert werden. Auf diese Weise wirken die Axialkräfte weder auf das Sonnenrad noch auf die Planetenräder, da die Axialkraft von den Druckflächen-Paarungen aufgenommen wird. Damit stellen die Axialkräfte innere Kräfte dar, die nicht auf das Bauteil wirken und dies damit axial belasten könnten.

Bei einem als Gruppengetriebe wirkenden Planetengetriebe kann der Hohlradträger mit Hilfe einer Schalteinrichtung, beispielsweise einer Synchronisierungseinrichtung, entweder in einer ersten Schaltstellung mit dem Getriebegehäuse verbunden werden oder in einer zweiten Schaltstellung über einen Kupplungskörper mit dem Planetenträger verbunden werden. Zur Lagerung des Hohlradträgers wird in vorliegender Erfindung vorgeschlagen, zur Aufnahme der Axialkräfte des Hohlrades im Schubbetrieb ein Axiallager zwischen Hohlradträger und dem mit dem Planetenträger drehfest verbundenen Kupplungskörper vorzusehen. Das axiale Lagerspiel dieses Lagers muß größer gestaltet sein als das axiale Spiel der Lagerung des Planetenträgers innerhalb des Getriebegehäuses.

Die Verzahnungsenden der Planetenradverzahnung und der Hohlradverzahnung sind im Bereich der Hohlradverzahnung an dem Ende der Hohlradverzahnung, das dem Hohlradträger gegenüberliegt, axial frei beweglich, während die Verzahnungsenden der Sonnenradverzahnung und der Planetenradverzahnung im Bereich der Sonnenradverzahnung an dem Ende der Sonnenradverzahnung axial frei beweglich sind, das der Druckflächen-Paarung zwischen Planetenrädern und Sonnenrad gegenüberliegt.

In einer erfindungsgemäßen Ausgestaltung kann dabei vorgesehen sein, daß die Druckflächen derart angeordnet sind, daß diese bis in die Radkörper der Planetenräder ragen. Auf diese Weise liegen die Druckflächen radial innen, bezogen auf den Wälzkreis der Planetenräder. Die auftretende Geschwindigkeitsdifferenz ist dabei jedoch relativ gering, insbesondere, je näher die Druckfläche am Wälzkreis liegt.

Selbstverständlich ist es grundsätzlich auch möglich, Druckringe an den Planetenrädern anzuordnen, wobei in diesem Falle die Druckflächen sich radial außerhalb des Wälzkreises des Sonnenrades befinden würden, aber hierfür wäre ein deutlich höherer Aufwand erforderlich, da, entsprechend der Anzahl der vorhandenen Planetenräder, entsprechend jeweils für jedes Planetenrad Druckringe erforderlich wären.

Bei der vorstehend beschriebenen Ausgestaltung ist insgesamt nur ein Druckring notwendig, der eine Druckflächen-Paarung bildet. Die anderen Druckflächen werden vorteilhafterweise durch die beiden Seiten der Planetenräder gebildet sowie durch eine in den Hohlradträger integrierte Druckfläche.

In einer vorteilhaften Ausgestaltung kann vorgesehen sein, daß die Druckflächen ballig oder konisch sind, wobei der Konuswinkel zwischen fünf Winkelminuten und sechs Grad betragen kann.

Durch diese Ausgestaltung kann sich zwischen den Druckflächen ein Schmierfilm oder Schmierkeil aufbauen, wodurch nur sehr geringe Reibungskräfte auftreten.

Bei einem Planetengetriebe in schrägverzahnter Bauweise treten zwangsläufig in Abhängigkeit von der Schrägrichtung der Verzahnung entsprechende Axialkräfte auf. Das Hohlrad ist im allgemeinen über eine Kuppelverzahnung auf einen Hohlradträger aufgeschoben, wobei auf einer Seite ein Sicherungsring für eine axiale Fixierung sorgt. Der Sicherungsring befindet sich dabei im allgemeinen auf der Seite des Hohlradträgers.

Bei einem Einbau des Planetengetriebes in einem Kraftfahrzeug wird die Schrägverzahnung so gewählt, daß bei Zugbelastung die Axialkräfte in Richtung auf die Druckflächen hin gerichtet sind. Bei den üblichen rechtsdrehenden Motoren bedeutet dies eine Schrägungsrichtung mit Rechtsverzahnung für das Sonnenrad.

Nachfolgend sind Ausführungsbeispiele der Erfindung anhand von Zeichnungen prinzipmäßig dargestellt.

Es zeigt:
- Fig. 1: einen Schnitt durch das erfindungsgemäße Planetengetriebe;
- Fig. 2: eine Ausschnittvergrößerung eines Teiles des Hohlrades mit einem Druckring;
- Fig. 3: eine Ausschnittvergrößerung eines Druckringes zwischen einem Sonnenrad und einem Planetenrad;
- Fig. 4: eine weitere Ausgestaltung nach Fig. 1 und
- Fig. 5: eine weitere Ausgestaltung nach Fig. 4.

Da das nachfolgend beschriebene Planetengetriebe grunddsätzlich von bekannter Bauart ist, wird es nur kurz beschrieben, wobei lediglich auf die erfindungsgemäßen Teile näher eingegangen wird.

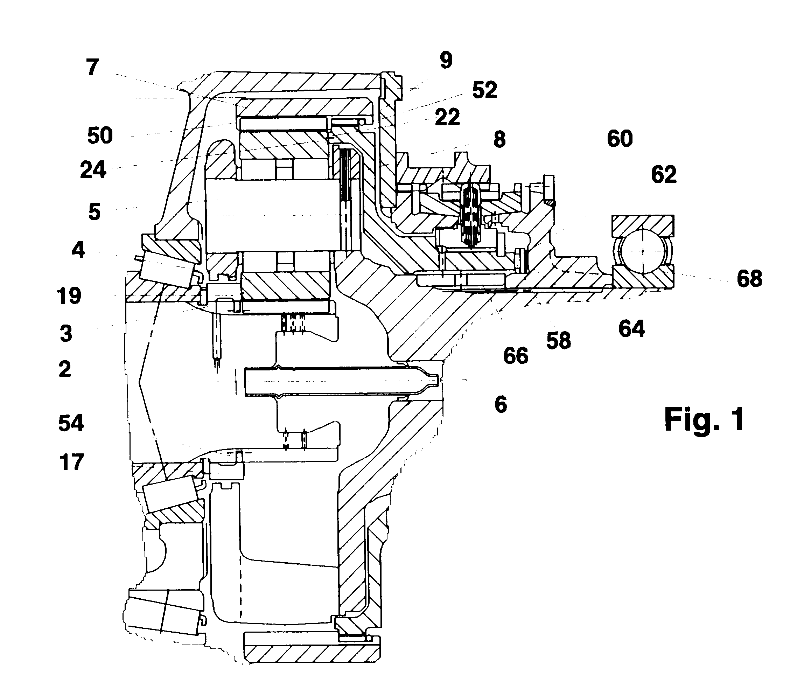

In der Fig. 1 ist das Ende einer Antriebswelle 2, die im allgemeinen die Hauptwelle eines Getriebes ist, mit einer Sonnenradverzahnung 3 ausgebildet. Um die Sonnenradverzahnung 3 herum sind mehrere Planetenräder 4 angeordnet, die jeweils auf Bolzen 5 gelagert sind, die wiederum an einem Planetenträger 6 befestigt sind, sofern sie mit dem Planetenträger 6 nicht einstückig sind.

Die Planetenräder 4 sind von einem Hohlrad 7 mit einer Innenverzahnung 50 umgeben. Die Sonnenradverzahnung 3 und die Planetenräder 4 sowie die Innenverzahnung 50 des Hohlrades 7 sind jeweils abwechselnd schräg verzahnt.

Über eine Kupplungsverzahnung 52, die im allgemeinen Teil einer Verlängerung der Innenverzahnung 50 des Hohlrades 7 ist, ist das Hohlrad 7 mit einem Hohlradträger 8 verbunden. Auf der in der Zeichnung rechten Seite stellt ein Sicherungsring 9, der in einer Umfangsnut in der inneren Umfangswand des Hohlrades 7 liegt, eine axiale Fixierung dar.

Der Hohlradträger 8 ist in axialer Richtung gegenüber dem Planetenträger 6 abgestützt. Dies geschieht vorzugsweise durch ein Rollenlager 58 zwischen dem Hohlradträger 8 und dem Kupplungskörper 60 der Synchronisierung des Gruppengetriebes, wobei zwischen Rollenlager 58 und Kupplungskörper 60 eine Scheibe 62 und eine Tellerfeder 64 angeordnet werden können, um ein axiales Spiel des Rollenlagers 58 realisieren zu können. Der Kupplungskörper 60 ist axial auf dem Planetenträger 6 fixiert, beispielsweise einerseits durch einen Ring 66 und andererseits durch die Lagerung 68 des Planetenträgers 6 im Getriebegehäuse.

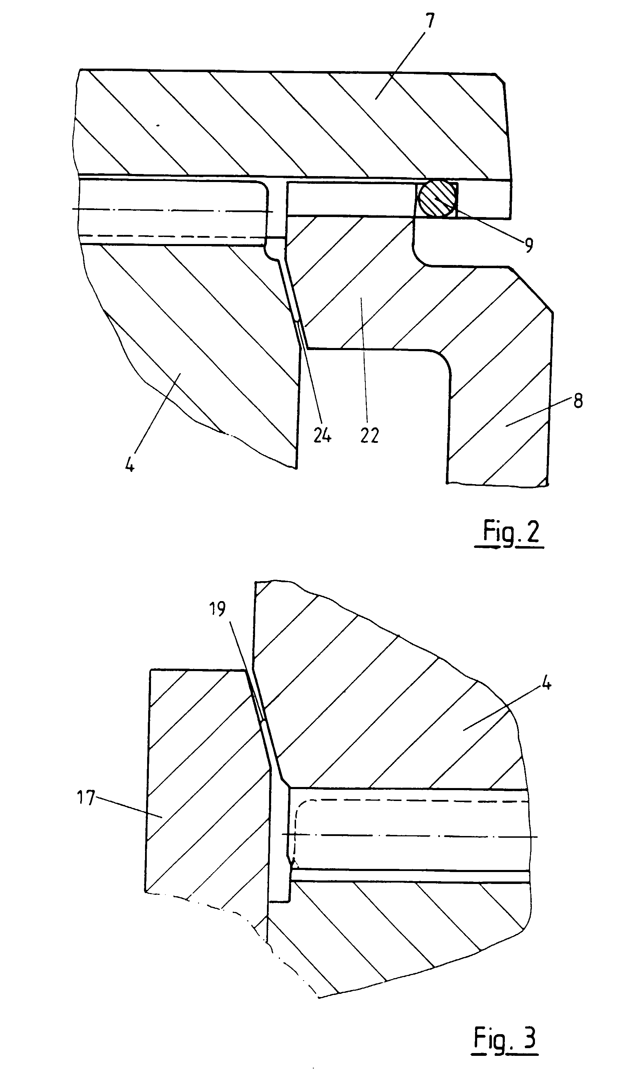

Zwischen den Planetenrädern 4 und der Antriebswelle 2 ist ein Druckring 17 angeordnet, der mit einer Innenverzahnung 54 in die Sonnenradverzahnung 3 eingreift und damit verdrehfest mit der Antriebswelle 2 verbunden ist. Der Druckring 17 besitzt dabei eine derartige Höhe bzw. einen derartigen Radius, daß er mit einem Bereich, der eine Druckfläche bildet, bis in die Radkörper der Planetenräder 4 ragt, d. h. bis in die Bereiche der nichtverzahnten Teile der Planetenräder 4. Diese Ausgestaltung ist aus der Fig. 3 deutlicher ersichtlich. Auf diese Weise stellt der Druckring 17 eine seitliche Führung durch die Druckflächen-Paarung 19 dar. Wie weiterhin aus der Fig. 3 ersichtlich ist, ist die Druckflächen-Paarung 19 zwischen dem Druckring 17 und den Planetenrädern 4 schräg bzw. leicht konisch von dem verzahnten Teil aus nach außen sich erweiternd ausgeführt, wobei gegebenenfalls auch eine Balligkeit vorgesehen werden kann.

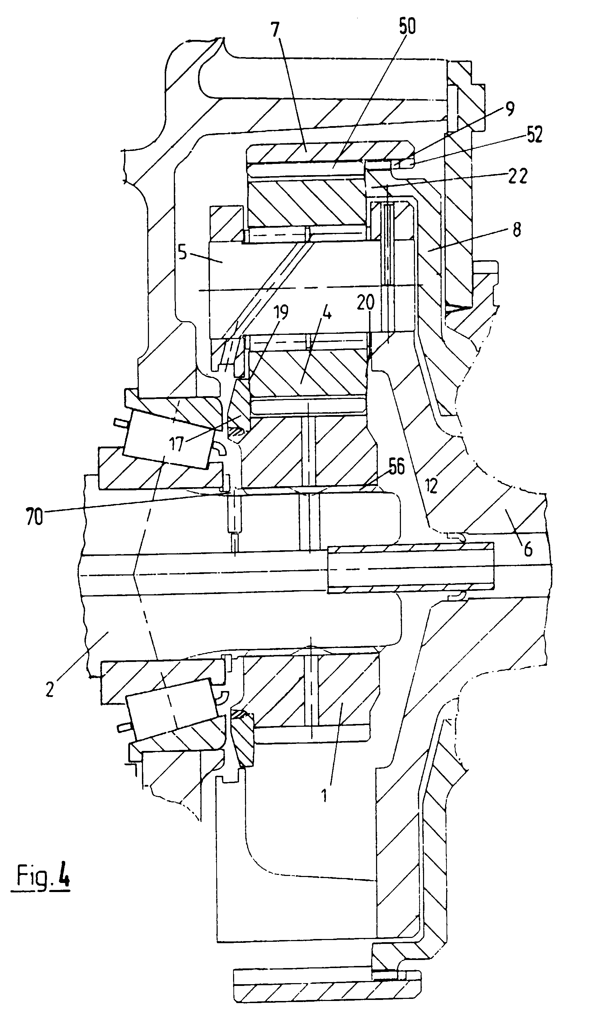

In der Fig. 4 ist die Anordnung nach Fig. 1 dahingehend abgeändert, daß hier ein separates Sonnenrad 1 vorgesehen ist. Dieses Sonnenrad 1 greift mit einer Kuppelverzahnung 56 in die Verzahnung 70 der Antriebswelle 2 ein und ist damit verdrehfest mit der Antriebswelle 2 verbunden. An der Seite des Sonnenrades 1, die zur Antriebswelle 2 weist, ist ein Druckring 17, z. B. durch Verschweißen, angeordnet. Der Druckring 17 besitzt dabei eine derartige Höhe bzw. einen derartigen Radius, daß er mit einem Bereich, der eine Druckfläche bildet, bis in die Radkörper der Planetenräder 4 ragt, d. h. bis in die Bereiche der nichtverzahnten Teile der Planetenräder 4. Diese Ausgestaltung ist aus der Fig. 3 deutlicher ersichtlich. Auf diese Weise stellt der Druckring 17 eine seitliche Führung durch die Druckflächen-Paarung 19 dar. Wie weiterhin aus der Fig. 3 ersichtlich ist, ist die Druckflächen-Paarung 19 zwischen dem Druckring 17 und den Planetenrädern 4 schräg bzw. leicht konisch von dem verzahnten Teil aus nach außen sich erweiternd ausgeführt, wobei gegebenenfalls auch eine Balligkeit vorgesehen werden kann.

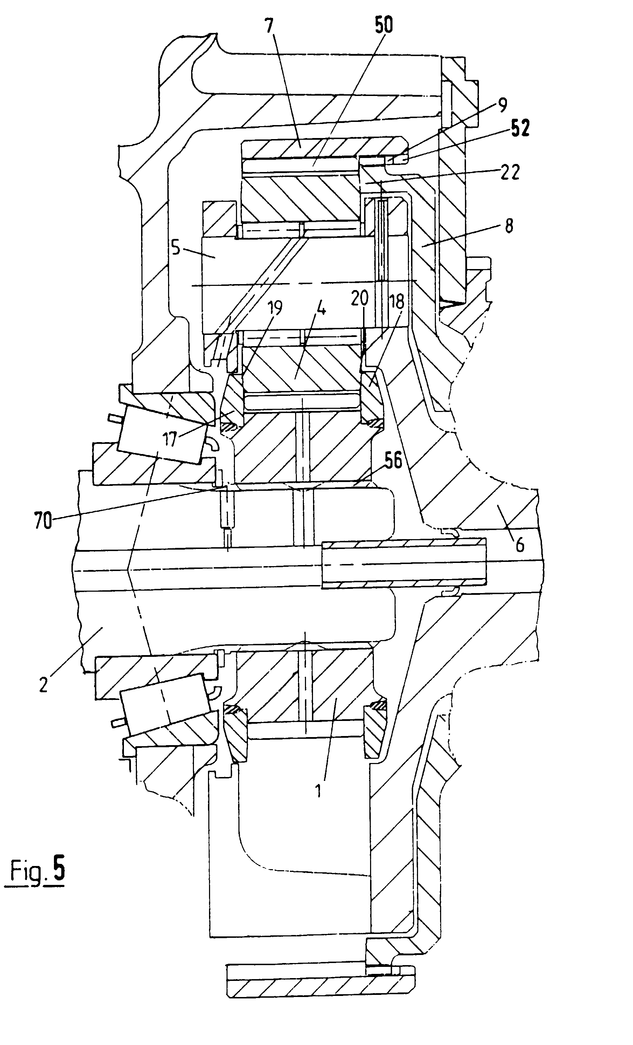

In der Fig. 5 ist die Anordnung nach Fig. 4 dahingehend abgeändert, daß hier an beiden Seiten des Sonnenrades 1 Druckringe 17 und 18, z. B. durch Verschweißen, angeordnet sind.

Die beiden Druckringe 17 und 18 besitzen dabei eine derartige Höhe bzw. einen derartigen Radius, daß sie mit Bereichen, die Druckflächen bilden, bis in die Radkörper der Planetenräder 4 ragen, d. h. bis in die Bereiche der nichtverzahnten Teile der Planetenräder. Diese Ausgestaltung ist aus der Fig. 3 deutlicher ersichtlich. Auf diese Weise stellen die beiden Druckringe 17 und 18 seitliche Führungen durch die entsprechende Druckflächen-Paarung 19 oder 20 dar. Wie weiterhin aus der Fig. 3 ersichtlich ist, sind die Druckflächen-Paarungen 19 bzw. 20 zwischen dem Druckring 17 bzw. 18 und den Planetenrädern 4 schräg bzw. leicht konisch von dem verzahnten Teil aus nach außen sich erweiternd ausgeführt, wobei gegebenenfalls auch eine Balligkeit vorgesehen werden kann.

Die Fig. 2 zeigt für alle Ausgestaltungen, daß in gleicher Weise die Axialkräfte zwischen dem Hohlradträger 8 und den Planetenrädern 4 durch einen Druckring 22 aufgenommen werden. Der Druckring 22 ist in bzw. an dem Hohlradträger 8 integriert. Hierzu ist er an seinem äußeren Umfangsbereich auf der zu den Planetenrädern 4 gerichteten Seite entsprechend so ausgestaltet, daß er, zusammen mit den entsprechend gegenüberliegenden Bereichen der Seitenwände der Planetenräder 4, eine Druckflächen-Paarung 24 bildet.

Die Montage des Planetengetriebes gestaltet sich bei den verschiedenen Ausgestaltungsformen unterschiedlich und erfolgt auf folgende Weise:

Die einfachste Montage ist bei der Ausgestaltung nach Fig. 1 möglich.

Auf die Sonnenradverzahnung 3 wird zunächst der Druckring 17 aufgeschoben. Dann werden die Planetenräder 4 an den Druckring 17 eingeschoben. Anschließend werden die Bolzen 5 durch die Bohrungen der Planetenräder 4 gesteckt und fest mit dem vorher positionierten Planetenträger 6 verbunden.

Danach wird das Hohlrad 7 über die Planetenräder 4 geschoben und der Hohlradträger 8 in die Kupplungsverzahnung 52 des Hohlrades 7 eingeschoben.

Die axiale Fixierung zwischen dem Hohlradträger 8 und dem Hohlrad 7 erfolgt abschließend durch den Sicherungsring 9. Das Hohlrad 7 ist über den Hohlradträger 8 und das Axiallager 58 axial fixiert.

In der Ausführungsform nach Fig. 4 wird zuerst das Sonnenrad 1 axial auf die Antriebswelle 2 geschoben, wonach die Planetenräder 4 an den Druckring 17 eingeschoben werden. Anschließend werden die Bolzen 5 durch die Bohrungen der Planetenräder 4 gesteckt und fest mit dem vorher positionierten Planetenträger 6 verbunden.

Danach wird das Hohlrad 7 über die Planetenräder 4 geschoben und der Hohlradträger 8 in die Kupplungsverzahnung 52 des Hohlrades 7 eingeschoben.

Die axiale Fixierung zwischen dem Hohlradträger 8 und dem Hohlrad 7 erfolgt abschließend durch den Sicherungsring 9. Das Hohlrad 7 ist über den Hohlradträger 8 und das Axiallager 58 axial fixiert, während das Sonnenrad 1 sich axial nach den Planetenrädern 4 orientieren kann und sich entsprechend hierzu auf der Antriebswelle 2 frei einstellt.

Bei der Montage nach der Ausführungsform der Fig. 5 schließlich wird zuerst das Sonnenrad 1 axial auf die Antriebswelle 2 geschoben, wonach die Planetenräder 4 radial von außen her zwischen die Druckringe 17 und 18 eingeschoben werden. Anschließend werden die Bolzen 5 durch die Bohrungen der Planetenräder 4 gesteckt und fest mit dem vorher positionierten Planetenträger 6 verbunden.

Danach wird das Hohlrad 7 über die Planetenräder 4 geschoben und der Hohlradträger 8 in die Kupplungsverzahnung 52 des Hohlrades 7 eingeschoben.

Die axiale Fixierung zwischen dem Hohlradträger 8 und dem Hohlrad 7 erfolgt abschließend durch den Sicherungsring 9. Das Hohlrad 7 ist über den Hohlradträger 8 und das Axiallager 58 axial fixiert, während das Sonnenrad 1 sich axial nach den Planetenrädern 4 orientieren kann und sich entsprechend hierzu auf der Antriebswelle 2 frei einstellt.

Je nach Belastungsrichtung ist in dieser Anordnung nach Fig. 5 eine jeweilige Anlage an dem entsprechenden Druckring 17 oder 18 innerhalb eines vorgegebenen Spieles möglich.

Mit der erfindungsgemäßen Anordnung läßt sich eine einfach zu montierende und dennoch den Erfordernissen vollständig Rechnung tragende Abstützung der Axialkräfte eines schrägverzahnten Planetengetriebes vornehmen. Die Anordnung ist kostengünstig sowohl bezogen auf den geringen Bauteileaufwand, als auch bezogen auf die vergünstigten Montagebedingungen.

### Bezugszeichen

- 1: Sonnenrad
- 2: Antriebswelle
- 3: Sonnenradverzahnung
- 4: Planetenräder
- 5: Bolzen
- 6: Planetenträger
- 7: Hohlrad
- 8: Hohlradträger
- 9: Sicherungsring
- 17: Druckring
- 18: Druckring
- 19: Druckflächen-Paarung
- 20: Druckflächen-Paarung
- 22: Druckring
- 24: Druckflächen-Paarung
- 50: Innenverzahnung
- 52: Kupplungsverzahnung
- 54: Innenverzahnung
- 56: Kupplungsverzahnung
- 58: Rollenlager
- 60: Kupplungskörper
- 62: Scheibe
- 64: Tellerfeder
- 66: Ring
- 68: Lagerung
- 70: Verzahnung

## Patentansprüche

1. Planetengetriebe mit Schtägverzahnung, insbesondere für Kraftfahrzeuge, mit einer mit einer Antriebswelle (2) drehfest verbindbaren Sonnenradverzahnung (3), mehreren in einem Planetenträger (6) gelagerten Planetenrädern (4), einem die Planetenräder (4) umschließenden Hohlrad (7), das mit einem Hohlradträger (8) verbunden ist, und mit Druckflächen-Paarungen (19, 24) zur Aufnahme von aus der Schrägverzahnung resulrierenden Axialkräften, dadurch **gekennzeichnet,** daß zwei Druckflächen-Paarungen (19, 24) vorgesehen sind, die derart angeordnet sind, daß aus der Schrägungsrichtung der Schrägverzahnung resultierende Axialkräfte bei Zugbetreib des Kraftfahrzeuges auf die Druckflächer-Parrungen (19, 24) hin ausgerichtet sind, so daß lediglich die bei Zugbetrieb des Kraftfahrzeugs auftretenden Axialkräfte von den Druckflächenparrungen aufgenommen werden und bei einem Schubbetrieb des Kraftfahrzeuges die Druckflächen-Paarungen (19, 24) von den aus der Schrägverzahnung resultierenden Axialkräften nicht beaufschlagt sind, wobei die eine Druckflächen-Paarung (19) im Bereich der Sonnenradverzahnung (3) axial zwischen der Antriebswelle (2) und den Planetenrädern (4) vorgesehen ist und die andere DruckflächenParrung (24) auf der dem Hohlradträger (8) zugewandten Seite der Planetenräder (4) axial zwischen den Planetenrädern (4) und dem Hochlradträger (8) vorgesehen ist.

2. Planetengetriebe nach Anspruch 1, dadurch **gekennzeichnet,** daß die Druckflächen-Paarungen (19, 24) bis in die Radkörper der Planetenräder (4) ragen.

3. Planetengetriebe nach Anspruch 1 oder 2, dadurch **gekennzeichnet** daß eine Druckfläche der Druckflächen-Paarung (24) durch eine in den Hohlradträger (8) integrierte Druckfläche gebildet ist.

4. Planetengetriebe nach einem der Ansprüche 1 bis 3, dadurch **gekennzeichnet,** daß die Druckflächen der Druckflächen-Paarungen (19, 24) ballig sind.

5. Planetengetriebe nach einem der Ansprüche 1 bis 3, dadurch **gekennzeichent,** daß die Druckflächen der Druckflächen-Paarungen (19, 24) konisch ausgebildet sind.

6. Planetengetriebe nach Anspruch 5, dadurch **gekennzeichnet,** daß der Konuswinkel zwischen fünf Winkelminuten und sechs Grad beträgt.

7. Planatengetreibe nach wenigstens einem der vorherigen Ansprüche, dadurch **gekennzeichnet,** daß der Hohlradträger (8) axial gegenüber dem Planetenträger (6) durch ein in axialer Richtung wirkendes Rollenlager (58) abgestützt ist.

8. Planetengetriebe nach Anspruch 7, dadurch **gekennzeichnet,** daß das Rollenlager (58) ein Axialspiel aufweist, das größer ist als ein Axialspiel einer Lagerung (68) des Planetenträgers (6).

9. Planatengetriebe nach wenigstens einem der vorherigen Ansprüche dadurch **gekennzeichnet,** daß die Sonnenradverzahnung (3) durch eine Verzahnung unmittelbar auf der Antreibswelle (2) gebildet ist.

10. Planetengetriebe nach einem der vorherigen Ansprüche 1 bis 9, dadurch **gekennzeichnet,** daß die Sonnenradverzahnung (3) auf einem Sonnenrad (1) angeordnet ist, das verdrehfest mit der Antribswelle (2) verbunden ist.

11. Planetengetriebe nach Anspruch 10, dadurch **gekennzeichnet,** daß ein Druckring (17), der eine Druckfläche der Druckflächen-Paarung (19) bildet, durch Schweißen mit dem Sonnenrad (1) verbunden ist.

## Claims

1. Planetary gearing with helical teeth, in particular for motor vehicles, having a sun wheel tooth system (3) non-rotatably connectable to a drive shaft (2), a plurality of planet wheels (4) supported in a planet carrier (6), a ring gear (7) enclosing the planet wheels (4) and connected to a ring gear carrier (8), and having thrust face pairings (19, 24) for taking up axial forces resulting from the helical teeth, characterized in that two thrust face pairings (19, 24) are provided, which are disposed in such a way that axial forces resulting from the direction of skew of the helical teeth in pulling mode of the motor vehicle are oriented towards the thrust face pairings (19, 24), so that only the axial forces arising in pulling mode of the motor vehicle are taken up by the thrust face pairings and in a pushing mode of the motor vehicle the thrust face pairings (19, 24) are not loaded by the axial forces resulting from the helical teeth, the one thrust face pairing (19) being provided in the region of the sun wheel tooth system (3) axially between the drive shaft (2) and the planet wheels (4) and the other thrust face pairing (24) being provided at the side of the planet wheels (4) directed towards the ring gear carrier (8) axially between the planet wheels (4) and the ring gear carrier (8).

2. Planetary gearing according to claim 1, characterized in that the thrust face pairings (19, 24) project as far as into the wheel bodies of the planet wheels (4).

3. Planetary gearing according to claim 1 or 2, characterized in that one thrust face of the thrust face pairing (24) is formed by a thrust face integrated in the ring gear carrier (8).

4. Planetary gearing according to one of claims 1 to 3, characterized in that the thrust faces of the thrust face pairings (19, 24) are crowned.

5. Planetary gearing according to one of claims 1 to 3, characterized in that the thrust faces of the thrust face pairings (19, 24) are of a conical design.

6. Planetary gearing according to claim 5, characterized in that the cone angle is between five angular minutes and six degrees.

7. Planetary gearing according to at least one of the previous claims, characterized in that the ring gear carrier (8) is supported axially relative to the planet carrier (6) by means of a roller bearing (58) acting in axial direction.

8. Planetary gearing according to claim 7, characterized in that the roller bearing (58) has an axial play which is greater than an axial play of a bearing arrangement (68) of the planet carrier (6).

9. Planetary gearing according to at least one of the previous claims, characterized in that the sun wheel tooth system (3) is formed by a tooth system directly on the drive shaft (2).

10. Planetary gearing according to one of the previous claims 1 to 9, characterized in that the sun wheel tooth system (3) is disposed on a sun wheel (1), which is connected non-rotatably to the drive shaft (2).

11. Planetary gearing according to claim 10, characterized in that a thrust ring (17), which forms one thrust face of the thrust face pairing (19), is connected by welding to the sun wheel (1).

## Revendications

1. Engrenage planétaire hélicoïdal, notamment pour véhicules automobiles, comportant un engrenage à roue solaire (3) pouvant être relié de façon non rotative avec un arbre menant (2), plusieurs roues planétaires (4) logées dans un support planétaire (6), une couronne de train planétaire (7) entourant les roues planétaires (4) et reliée à un support de couronne (8) et des appariements de surfaces de pression (19, 24) pour recevoir les forces axiales qui résultent de l'engrenage hélicoïdal, **caractérisé** en ce que deux appariements de surfaces de pression (19, 24) sont prévus et sont disposés de telle façon que les forces axiales résultant de l'inclinaison de l'engrenage hélicoïdal sont dirigées sur les appariements de surfaces de pression (19, 24) lors de la marche en traction du véhicule, de façon que seules les forces axiales se produisant lors de la marche en traction sont absorbées par les appariements des surfaces de pression, et que lors de la marche en poussée du véhicule, les appariements de surfaces de pression (19, 24) ne sont pas sollicités par les forces axiales résultant de l'engrenage hélicoïdal, et en ce qu'un appariement de surfaces de pression (19) est prévu dans la zone de l'engrenage à roue solaire (3) en position axiale entre l'arbre menant (2) et les roues planétaires (4), tandis que l'autre appariement de surfaces de pression (24) est prévu sur le côté des roues planétaires (4) dirigé vers le support de la couronne (8) en position axiale entre les roues planétaires (4) et le support de la couronne (8).

2. Engrenage planétaire selon la revendication 1, **caractérisé** en ce que les appariements de surfaces de pression (19, 24) avancent jusque dans les corps des roues planétaires (4).

3. Engrenage planétaire selon la revendication 1 ou 2, **caractérisé** en ce qu'une surface de pression de l'appariement de surfaces de pression (24) est formée par une surface de pression intégrée dans le support de la couronne (8)

4. Engrenage planétaire selon l'une des revendications 1 à 3, **caractérisé** en ce que les surfaces de pression des appariements de surfaces de pression (19, 24) sont bombées.

5. Engrenage planétaire selon l'une des revendications 1 à 3, **caractérisé** en ce que les surfaces de pression des appariements de surfaces de pression (19, 24) sont de forme conique.

6. Engrenage planétaire selon la revendication 5, **caractérisé** en ce que l'angle du cône se situe entre cinq minutes d'angle et six degrés.

7. Engrenage planétaire selon au moins l'une des revendications précédentes, **caractérisé** en ce que le support de la couronne (8) est, par rapport au support planétaire (6), axialement en appui sur un palier à rouleaux (58) à action axiale.

8. Engrenage planétaire selon la revendication 7, **caractérisé** en ce que le palier à rouleaux (58) comporte un jeu axial qui est plus grand qu'un jeu axial d'un palier (68) du support planétaire (6).

9. Engrenage planétaire selon l'une des revendications précédentes, **caractérisé** en ce que l'engrenage à roue solaire (3) est formé par une engrenure directement sur l'arbre menant (2).

10. Engrenage planétaire selon l'une des revendications 1 à 9, **caractérisé** en ce que l'engrenage à roue solaire (3) est agencé sur une roue solaire (1) qui est reliée de façon non rotative à l'arbre menant (2).

11. Engrenage planétaire selon la revendication 10, **caractérisé** en ce qu'une bague de pression (17) formant une surface de pression de l'appariement de surfaces de pression (19) est relié par soudure à la roue solaire (1).
